# FASCICULE DE BREVET EUROPEEN

(11) **EP 3 283 419 B1**
(45) Date de publication et mention de la délivrance du brevet: **24.02.2021**
(21) Numéro de dépôt: 16730874.1
(22) Date de dépôt: 13.04.2016
(51) Int. Cl.: B65G 65/00, B65B 21/18, B65G 47/90

(54) **PROCEDE ET DISPOSITIF DE MANUTENTION DE BOUTEILLES.**
VERFAHREN UND VORRICHTUNG ZUR FLASCHENHANDHABUNG
BOTTLE HANDLING METHOD AND DEVICE

(30) Priorité: 17.04.2015 FR 1553458
(43) Date de publication de la demande: 21.02.2018
(73) Titulaire: BL Robotics, 91280 Saint Pierre du Perray (FR)
(72) Inventeur: EL MORADI, Mounia, 91250 Tigery (FR)
(74) Mandataire: Benech, Frédéric
(86) Numéro de dépôt international: PCT/FR2016/050852
(87) Numéro de publication internationale: WO 2016/166474

(56) Documents cités:
- EP-A1- 1 283 171
- DE-A1- 3 139 939
- US-A1- 2003 180 136
- US-B1- 6 371 717
- SteelheadSystems: "5 gallon Robotic Loading and Unloading", , 8 mars 2010 (2010-03-08), page 1, XP054976368, Extrait de l'Internet: URL:https://www.youtube.com/watch?v=HwjCGx sLO4c [extrait le 2016-02-12]
- Ram Mechanical ET AL: "Robotic Loading of 5 Gallon Bottles", , 16 janvier 2014 (2014-01-16), page 1, XP054976369, Extrait de l'Internet: URL:https://www.youtube.com/watch?v=EEcZgz BXU9E [extrait le 2016-02-12]

## Description

La présente invention concerne un procédé de manutention de bouteilles dans lequel on transfère et on présente verticalement les bouteilles en file indienne à un poste de reprise de bouteilles pour les introduire ensuite à l'horizontal dans un casier de transport et/ou de stockage.

Elle concerne également un dispositif mettant en œuvre un tel procédé.

Elle trouve une application particulièrement importante, bien que non exclusive, dans le domaine des mises en casier de bouteilles d'eau potable de grand volume, par exemple de l'ordre de 20 litres (5 à 6 Gallons en unités de valeur anglo-saxonne), notamment dans les pays chauds, en particulier dans les pays du Maghreb et du Moyen Orient.

On connaît déjà des dispositifs et/ou procédés de mises en casier de bouteilles.

Par exemple il est connu (FR 2 587 009) un dispositif de chargement et déchargement de casiers portant des récipients cylindriques disposés horizontalement.

Un tel dispositif prévu pour la manutention de bouteilles concerne des bouteilles de gaz assez lourdes (35 kg), utilise des bras de centrage, des châssis basculants et d'autres appareils compliqués devant répondre aux normes de sécurité que la manipulation de bouteilles au contenu dangereux, nécessite.

On connaît également des procédés de mise en casier automatique de bouteilles plus légères (1 litre), présentées à la verticale, qui s'effectue par le dessus.

C'est le cas notamment de la mise en casier de bouteilles de bière ou de boissons gazeuses.

La mise en casier à l'horizontal n'est par contre pas préconisée pour ce type de bouteille du fait d'une plus grande complexité de manutention.

On connait également (EP 1 283 171 et US 6,371,717...) des systèmes de préhension et de chargement de bouteilles à l'horizontale utilisant des trajectoires courbes. De tels systèmes présentent des inconvénients notamment en matière de taux de disponibilité.

Les racks utilisés en général, métalliques, sont en effet chargés et déchargés plusieurs fois par jour, subissent des déformations et lorsqu'ils arrivent au poste de chargement robotisé génèrent des collisions notamment du fait de ces déformations faisant chuter les taux de disponibilité de la ligne à des valeurs inférieures à 80%, par exemple 70%.

On connait également un système de préhension et de chargement de bouteilles de la société Steelhead d'après la vidéo "5 gallon Robotic Loading and Unloading" (URL: https://www.youtube.com/ watch?v=HwjCGxsLO4c), qui correspond au préambule de la revendication 1.

La présente invention vise à fournir un procédé et un dispositif de manutention de bouteilles répondant mieux que ceux antérieurement connus aux exigences de la pratique notamment en ce qu'elle va permettre une manutention automatique à haute cadence de bouteilles de poids moyens compris entre 18 kg et 25 kg, par exemple des bouteilles de 5 Gallons, et ce de façon facile à mettre en œuvre par un opérateur et pour un coût faible.

Avec l'invention le taux disponibilité est supérieur à 95% voire 97%.

Ainsi même si le rack est disposé avec un écart de ± 2 cm selon le sens de la marche du convoyeur l'introduction des bouteilles se fait sans collision.

Dans ce but la présente invention propose un procédé de manutention de bouteilles tel que revendiqué dans la revendication 1.

En monitorant précisément les étapes et en ayant un point d'approche avec un angle puis une trajectoire rectiligne sur 70 à 100 mm dans le casier à vitesse réduite, l'invention permet un accostage sans collision et une introduction maintenue sans heurt dans les alvéoles concernées.

Dans des modes de réalisation avantageux, on a de plus recours à l'une et/ou à l'autre des dispositions suivantes :
- l'angle est de l'ordre de 30°;
- la troisième vitesse est plus forte que la deuxième vitesse, par exemple de l'ordre de 250 mm/s ;
- la deuxième vitesse, d'accostage des culs de bouteilles sur l'extrémité ouverte d'une rangée d'alvéole de casier, est inférieure à 200 mm/s ;
- les étapes sont effectuées en automatique ou semi-automatique, et la pince étant actionnée par un robot, la commande de la pince et du robot, l'avancée des bouteilles et l'avancée des casiers sont commandés par un opérateur avec une même et unique interface manuelle de commande.

Dans le cas du fonctionnement en automatique, l'interface de commande ne sert alors essentiellement à qu'initier ou arrêter le fonctionnement du procédé.

Dans le cas d'un fonctionnement en semi-automatique on entend un fonctionnement dans lequel une partie des étapes s'effectue automatiquement un opérateur étant amené à intervenir ponctuellement manuellement pour effectuer certaines tâches et/ou passer d'une première séquence automatique d'opérations à une deuxième séquence automatique d'opérations.

L'invention propose également un dispositif de manutention de bouteilles selon la revendication 6.

Dans un mode de réalisation avantageux la pince comprend une barre agencée pour être connectée au bras du robot, munie d'au moins deux goulottes (par exemple quatre) d'insertion des cols de bouteilles, chaque goulotte étant munie d'une collerette de soutien de la partie supérieure des bouteilles dont le col a été inséré dans lesdites goulottes.

L'invention sera mieux comprise à la lecture de la description qui suit d'un mode de réalisation donné ci-après à titre d'exemple non limitatif. Elle se réfère aux dessins qui l'accompagnent dans lesquels :
La figure 1 est une vue en perspective et schématique d'un dispositif selon un premier mode de réalisation de l'invention.
La figure 2 montre en perspective l'approche de l'étape de prise des bouteilles avant mise en place dans les casiers par le robot muni d'une pince selon le mode de réalisation de l'invention plus particulièrement décrit ici.
La figure 3 montre la pince en fonctionnement avec les bouteilles lors de la phase d'approche vers les casiers.
La figure 4 est une vue de dessus du mode de réalisation de la pince de la figure 3.
Les figures 5 et 5A montrent l'interface sous forme de télécommande manuelle permettant de façon unique de commander l'ensemble des opérations mises en œuvre par le procédé selon l'invention.

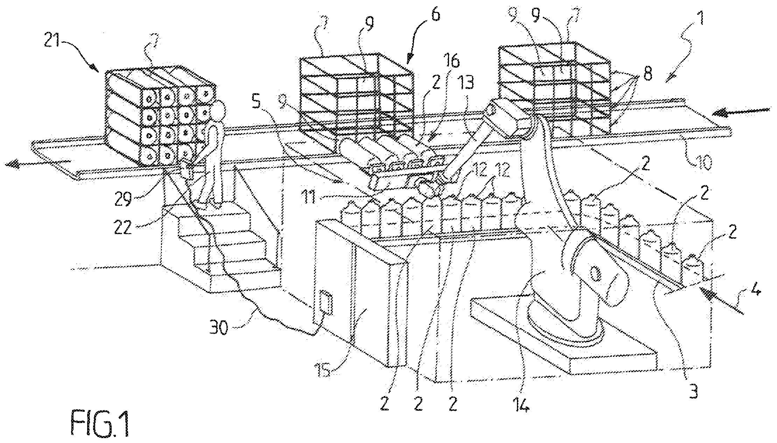

La figure 1 montre un dispositif 1 de manutention de bouteilles 2 comprenant un rack 3 connu en lui-même, de transfert et d'amenée en automatique (flèche 4) des bouteilles verticales en file indienne.

Le rack comprend par exemple une chaîne pousseuse se déplaçant par à-coup entre deux rails de guidage latéraux. Les bouteilles en contact les unes avec les autres sont stoppées par un moyen de butée à un poste 5 de reprise des bouteilles.

Ce poste est situé face à un poste 6 de présentation de casiers 7. Chaque casier comprend par exemple quatre rangées 8 de quatre alvéoles 9 de rétention des bouteilles à l'horizontal.

Le poste 6 de présentation des casiers comprend un tapis 10 d'amenée des casiers vides selon une cadence déterminée. Les casiers sont quant à eux disposés préalablement à l'horizontal, par exemple par un opérateur en amont sur le tapis et/ou, de façon connue en elle-même, en automatique.

Le dispositif 1 comprend une pince 11 de préhension simultanée des cols 12 de quatre bouteilles 2, la pince 11 étant solidaire en déplacement du bras 13 d'un robot 14 de type connu, par exemple un robot fabriqué par la société japonaise FANUC.

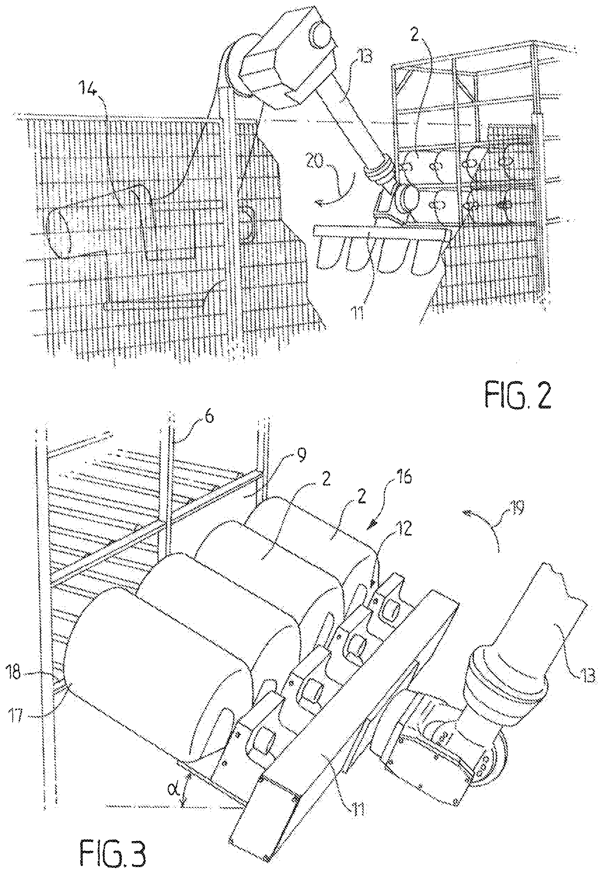

Le robot commandé par l'automate (armoire 15) est agencé pour saisir et amener les bouteilles 2 dans une première position à une première vitesse (par exemple 1 000 mm/s), puis pour basculer la série 16 de quatre bouteilles saisies par leurs cols et pour les présenter avec un angle α déterminé par exemple de 30° avec l'horizontal à l'accostage du casier en vis à vis (cf. figure 3).

Plus précisément la pince est agencée pour accoster le cul 17 des bouteilles sur l'extrémité inférieure 18 des alvéoles 9, à une deuxième vitesse, ralentie, plus faible que la première vitesse, (par exemple de 150 mm/s) puis de les redresser (flèche 19) pour les introduire à une troisième vitesse plus rapide par exemple 500 mm/s, puis pour lâcher les bouteilles par rétro basculement en libérant les goulots, et revenir à vide avec basculement selon la flèche 20, plus rapide (par exemple 1 000 mm/s) (cf. figure 2).

Cette décomposition de vitesses permet d'optimiser le diagramme des temps tout en garantissant une introduction sans risque d'accident.

A noter qu'avantageusement un indicateur de contrainte (non représenté) peut stopper le mouvement du robot au cas où il y aurait une contre force trop importante exercée au moment de l'introduction (casier cassé, avec membrures d'une alvéole dans le trajet des bouteilles par exemple).

L'automate 15 est ensuite agencé pour venir saisir une deuxième série de bouteilles 2 qui a entretemps été amenée en position face à la pince par le rack de transport 3 qui avance dès échappement de la pince avec la première série de bouteilles.

Une fois le casier 7 rempli, il est évacué (position 21) pour être s'il y a lieu contrôlé visuellement par l'opérateur 22.

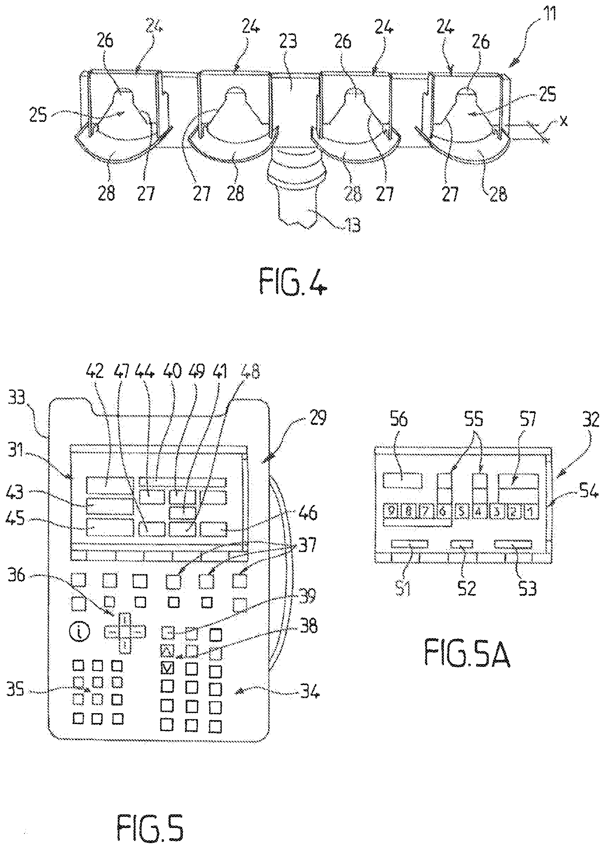

La figure 4 montre en vue de dessus la pince 11 selon le mode de réalisation de l'invention plus particulièrement décrit ici.

La pince 11 comprend une barre 23 de support de quatre goulottes 24 d'insertion des cols de bouteilles, présentant chacune une ouverture 25 munie d'une partie supérieure 26 semi-cylindrique de forme complémentaire (avec un jeu) avec l'extrémité du goulot des bouteilles à saisir, et une partie inférieure en V dont les branches sont écartées vers l'extérieur et vers le bas, pour guider la partie s'élargissant des goulots des bouteilles vers leur corps.

Chaque ouverture 25 est munie d'une collerette 28 de soutien en portion de cylindre sur une distance x, par exemple 10 cm, de la partie supérieure des bouteilles à proximité des goulots.

Ce type de goulotte autorise le désencastrement facile des goulots par simple basculement de la pince vers le bas une fois les bouteilles mises dans les racks.

En référence à la figure 1 et selon le mode de réalisation plus particulièrement décrit ici, le dispositif comporte un appareil 29 de contrôle/commande unique par l'opérateur 22 du rack 3 d'amenée des bouteilles, du tapis 10 d'amenée des casiers, du robot 14 et de sa pince 11. L'appareil 29 est par exemple relié à l'automate 15 de commande de tous ces éléments, par un câble 30.

On a représenté sur les figures 5 et 5A l'appareil 29 et ses deux écrans 31 et 32 numériques permettant d'avoir sur le même boîtier manuellement portable 33, les commandes par touches digitales soit du robot et de sa pince (écran 31), soit des moyens d'alimentation en casiers et en bouteilles (écran 32) .

L'appareil 29 comprend également une partie 34 comportant de façon connue en elle-même un pavé numérique 35, des touches 36 de circulation dans l'écran digital, des touches de fonctions 37 et des touches 38, 39 pour divers commandes (avancer/reculer, maintien en « stand-by », etc...).

En référence aux écrans 31 et 32, il est maintenant précisé les touches et leur programmation comme suit.

L'écran 31 est par exemple accessible par le biais d'une des touches fonctions 37, les instructions (effectuées dans le langage compatible avec le robot) pouvant être, à titre d'exemple non limitatif, comme indiqué ci-après.

La touche 40 démarre la procédure automatique en mettant le robot en position initiale puis initie, soit directement, soit par action complémentaire de l'opérateur (appuyant sur une touche « START » 41), les cycles décrits ci-dessus en référence au procédé.

Les voyants 42 et 43 signalent quant à eux le fonctionnement ou le mode « Pause » du robot.

Une touche 44 permet un « RESET ».

En cas d'incident (voyant 45 « FAULT »), il y a également et par exemple possibilité d'intervenir en manuel pour l'opérateur, de contourner le robot (touche 46), d'éjecter un casier (touche 47), d'agir sur la pince pour lâcher ou prendre les bouteilles (touche 48) ou de mettre simplement en « stand-by » (touche « HOLD » 49).

D'autres fonctionnalités à la portée de l'homme du métier peuvent par ailleurs et de façon non limitative également exister.

L'écran 32 concerne quant à lui sur le même appareil/boîtier (29/33) le pilotage des convoyeurs, c'est à dire le rack d'amenée des bouteilles et le tapis d'avancée/évacuation des casiers. Les commandes sont programmées ici encore de façon connue en elle-même par l'homme du métier dans le langage correspondant aux appareils utilisés.

Des touches classiques de commande arrière (touche 51) stop (touche 52) et avant (touche 53) sont classiquement prévues.

Un suivi de l'emplacement des casiers [touche 54 (1 à 9)] sur le tapis et d'actionnement du rack de bouteilles (touche 55) avec un bouton « RESET » 56 s'il y a lieu sont par exemple prévus de façon non limitative et permettent le fonctionnement en automatique tel que décrit précédemment en démarrant un cycle (bouton 57) ou en intervenant en semi-automatique (actionnement sur les autres boutons).

Comme il va de soi et comme il résulte également de ce qui précède, la présente invention n'est pas limitée aux modes de réalisation plus particulièrement décrits, elle est limitée telle que décrite dans les revendications 1 et 6. Elle en embrasse au contraire toutes les variantes et notamment celles où les casiers sont différents ou celles où la pince a une autre configuration.

## Revendications

1. Procédé de manutention de bouteilles (2) dans lequel on transfère et on présente verticalement les bouteilles en file longitudinale à un poste (5) de reprise des bouteilles disposé en vis à vis d'un poste (6) de présentation de casiers (7), les casiers (7) étant disposés à l'horizontale et munis d'au moins une première rangée (8) horizontale d'alvéoles (9) de rétention desdites bouteilles, procédé dans lequel on effectue les étapes suivantes :
on saisit les cols (12) d'une première série (16) d'au moins trois bouteilles avec une pince (11) de préhension,
on présente la première série de bouteilles ainsi saisies à l'horizontale, sur l'extrémité (18) ouverte de la première rangée horizontale d'alvéoles (9) d'un premier casier (7),
on fait pénétrer ladite première série de bouteilles horizontalement en totalité dans ladite première rangée (8),
on libère la pince (11) pour venir saisir une deuxième série de bouteilles que l'on introduit à la suite ou dans une deuxième rangée (8) dudit premier casier en renouvelant les étapes ci-dessus appliquées à ladite première série et ainsi de suite pour remplir toutes les rangées dudit premier casier, puis
on évacue ledit premier casier (7) et on renouvelle les étapes ci-dessus sur un casier suivant, **caractérisé en ce que** l'on déplace les bouteilles (2) entre la file verticale et une première position à distance du casier à une première vitesse, on déplace les bouteilles (2) entre cette position à distance et une deuxième position d'accostage en biais du cul (17) des bouteilles sur ladite extrémité ouverte, l'angle α pour accoster le cul des bouteilles étant compris entre 45° et 20° avec l'horizontale, et on bascule lesdites bouteilles (2) à l'horizontale à une deuxième vitesse, plus faible que la première vitesse, et on introduit les bouteilles dans ladite première rangée d'alvéoles (9) à une troisième vitesse.

2. Procédé selon la revendication 1, **caractérisé en ce que** l'angle α est de l'ordre de 30°.

3. Procédé selon l'une quelconque des revendications précédentes **caractérisé en ce que** la troisième vitesse est plus forte que la deuxième vitesse.

4. Procédé selon la revendication 3, **caractérisé en ce que** la deuxième vitesse, d'accostage des culs (17) de bouteilles sur l'extrémité (18) ouverte d'une rangée d'alvéole de casier, est inférieure à 200 mm/s.

5. Procédé selon l'une quelconque des revendications précédentes, **caractérisé en ce que** les étapes sont effectuées en automatique ou semi-automatique, et **en ce que** la pince (11) étant actionnée par un robot (14), la commande de la pince et du robot (14), l'avancée des bouteilles (2) et l'avancée des casiers (7) sont commandés par un opérateur (22) avec une même et unique interface (29) manuelle de commande.

6. Dispositif (1) de manutention de bouteilles (2) comprenant des moyens (3) de transfert et de présentation verticale de bouteilles (2) en file longitudinale à un poste (5) de reprise des bouteilles, ledit poste (5) de reprise et un poste (6) de présentation de casiers (7), chaque casier (7) étant muni d'au moins une première rangée (8) d'alvéoles (9) de rétention de bouteilles (2), dans lequel le poste (6) de présentation des casiers (7) comprend des moyens (10) d'amenée et de positionnement des casiers à l'horizontale en vis à vis du poste (5) de reprise,
le poste (5) de reprise comprend
une pince (11) de préhension des cols (12) d'une première série (16) d'au moins trois bouteilles (2) ,
un robot (14) muni d'un bras (13) solidaire en déplacement de la pince (11), agencé pour présenter à l'horizontale la première série (16) de bouteilles ainsi saisies sur l'extrémité (18) ouverte de la première rangée (8) horizontale d'alvéoles (9) d'un premier casier (7), avant de les enfoncer horizontalement en totalité dans ladite première rangée (8),
des moyens (15, 29) de commande pour libérer alors la pince (11) et venir saisir une deuxième série de bouteilles (2) pour l'introduire dans une deuxième rangée (8) dudit premier casier (7) en renouvelant les étapes ci-dessus appliquées à ladite première série et ainsi de suite pour remplir toutes les rangées (8) dudit premier casier, et
des moyens (10) convoyeur pour évacuer ledit premier casier ainsi rempli et lui substituer un casier (7) suivant au poste (6) de présentation de casiers, **caractérisé en ce que** les moyens (15, 29) de commande du robot sont agencés pour déplacer les bouteilles (2) entre la file verticale et une première position à distance du casier à une première vitesse, pour déplacer les bouteilles (2) entre cette position à distance et une deuxième position d'accostage en biais du cul (17) des bouteilles (2) sur ladite extrémité ouverte, l'angle pour accoster le cul des bouteilles étant compris entre 45° et 20° avec l'horizontale, et de basculement des bouteilles à l'horizontale à une deuxième vitesse, plus faible que la première vitesse, et pour introduire les bouteilles (2) dans les alvéoles (9) à une troisième vitesse, **en ce que** les étapes sont effectuées en automatique, et **en ce que** la pince étant actionnée par un robot, la commande de la pince et du robot, l'avancée des bouteilles et l'avancée des casiers sont commandées par un opérateur avec une même et unique interface manuelle de commande.

7. Dispositif selon la revendication 6, **caractérisé en ce que** la troisième vitesse est plus forte que la deuxième vitesse.

8. Dispositif selon l'une quelconque des revendications 6 ou 7, **caractérisé en ce que** la pince (11) comprend une barre (23) agencée pour être connectée au bras du robot (14), munie de quatre goulottes (24) d'insertion des cols (17) de bouteilles, chaque goulotte étant munie d'une collerette (28) de soutien de la partie supérieure des goulots de bouteilles dont le col a été inséré dans lesdites goulottes.

## Patentansprüche

1. Verfahren zur Handhabung von Flaschen (2), bei dem die Flaschen verfahren und in einer länglichen Schlange an einer Station (5) für die Rücknahme der Flaschen vertikal vorgehalten werden, welche gegenüber einer Station (6) zum Vorhalten von Kisten (7) angeordnet ist, wobei die Kisten (7) horizontal angeordnet sind und mit mindestens einer ersten horizontalen Reihe (8) von Aussparungen (9) zum Zurückhalten der Flaschen versehen sind, und bei dem die folgenden Schritte durchgeführt werden:
- die Hälse (12) einer ersten Reihe (16) von mindestens drei Flaschen werden mit einer Greifzange (11) erfasst,
- die erste Reihe derart erfasster Flaschen wird an dem offenen Ende (18) der ersten horizontalen Reihe von Aussparungen (9) einer ersten Kiste (7) horizontal vorgehalten,
- die erste Flaschenreihe wird vollständig horizontal in die erste Reihe (8) eingeführt,
- die Zange (11) wird freigegeben, um eine zweite Flaschenreihe zu erfassen, die hinterher bzw. in eine zweite Reihe (8) der ersten Kiste eingeführt wird, indem die oben genannten, auf die erste Reihe angewendeten Schritte wiederholt werden usw., um alle Reihen der ersten Kiste zu füllen, und
- die erste Kiste (7) abgeführt wird und die oben genannten Schritte für eine nächste Kiste wiederholt werden,
**dadurch gekennzeichnet,**
**dass** die Flaschen (2) zwischen der vertikalen Schlange und einer ersten, von der Kiste beabstandeten Position mit einer ersten Geschwindigkeit verfahren werden, die Flaschen (2) zwischen dieser beabstandeten Position und einer zweiten Position zum schrägen Andocken des Bodens (17) der Flaschen an dem offenen Ende verfahren werden, wobei der Winkel α für das Andocken des Bodens der Flaschen zwischen 45° und 20° zur Horizontalen liegt, und die Flaschen (2) mit einer zweiten Geschwindigkeit horizontal verkippt werden, die geringer ist als die erste Geschwindigkeit, und die Flaschen in die erste Reihe von Aussparungen (9) mit einer dritten Geschwindigkeit eingeführt werden.

2. Verfahren nach Anspruch 1,
**dadurch gekennzeichnet,**
**dass** der Winkel α in der Größenordnung von 30° liegt.

3. Verfahren nach einem der vorhergehenden Ansprüche,
**dadurch gekennzeichnet,**
**dass** die dritte Geschwindigkeit größer ist als die zweite Geschwindigkeit.

4. Verfahren nach Anspruch 3,
**dadurch gekennzeichnet,**
**dass** die zweite Geschwindigkeit für das Andocken der Flaschenböden (17) an dem offenen Ende (18) einer Reihe von Kistenaussparungen kleiner ist als 200 mm/s.

5. Verfahren nach einem der vorhergehenden Ansprüche,
**dadurch gekennzeichnet,**
**dass** die Schritte automatisch oder halbautomatisch erfolgen und dass bei durch einen Roboter (14) betätigter Zange (11) die Steuerung der Zange und des Roboters (14), das Vorrücken der Flaschen (2) und das Vorrücken der Kisten (7) durch einen Operator (22) mit ein und derselben manuellen Steuerungsschnittstelle (29) gesteuert werden.

6. Vorrichtung (1) für die Handhabung von Flaschen (2) mit Mitteln (3), um die Flaschen zu verfahren und in einer länglichen Schlange an einer Station (5) für die Rücknahme der Flaschen vertikal vorzuhalten, mit der Rücknahmestation (5) und einer Station (6) zum Vorhalten von Kisten (7), wobei jede Kiste (7) mit mindestens einer ersten Reihe (8) von Aussparungen (9) zum Zurückhalten von Flaschen (2) versehen ist, bei der die Station (6) zum Vorhalten der Kisten (7) Mittel (10) umfasst, um die Kisten zuzuführen und gegenüber der Rücknahmestation (5) horizontal zu positionieren, wobei die Rücknahmestation (5) umfasst:
- eine Zange (11) für das Erfassen der Hälse (12) einer ersten Reihe (16) von mindestens drei Flaschen (2) erfasst,
- einen Roboter (14) mit einem mit der Zange (11) bewegungsverbundenen Arm (13), welcher angeordnet ist, um die erste Reihe (16) derart erfasster Flaschen an dem offenen Ende (18) der ersten horizontalen Reihe (8) von Aussparungen (9) einer ersten Kiste (7) horizontal vorzuhalten, bevor sie vollständig horizontal in die erste Reihe (8) eingeführt werden,
- Steuerungsmittel (15, 29), um anschließend die Zange (11) freizugeben und eine zweite Reihe von Flaschen (2) zu erfassen, die in eine zweite Reihe (8) der ersten Kiste (7) eingeführt wird, indem die oben genannten, auf die erste Reihe angewendeten Schritte wiederholt werden usw., um alle Reihen (8) der ersten Kiste zu füllen, und
- Fördermittel (10), um die erste derart gefüllte Kiste abzuführen und sie durch eine nächste Kiste (7) an der Station (6) zum Vorhalten von Kisten zu ersetzen,
**dadurch gekennzeichnet,**
**dass** die Mittel (15, 29) für die Steuerung des Roboters angeordnet sind, um die Flaschen (2) zwischen der vertikalen Schlange und einer ersten, von der Kiste beabstandeten Position mit einer ersten Geschwindigkeit zu verfahren, um die Flaschen (2) zwischen dieser beabstandeten Position und einer zweiten Position zum schrägen Andocken des Bodens (17) der Flaschen (2) an dem offenen Ende zu verfahren, wobei der Winkel für das Andocken des Bodens der Flaschen zwischen 45° und 20° zur Horizontalen liegt, und zum horizontalen Verkippen der Flasche mit einer zweiten Geschwindigkeit, die geringer ist als die erste Geschwindigkeit, und um die Flaschen (2) in die Aussparungen (9) mit einer dritten Geschwindigkeit einzuführen,
die Schritte automatisch erfolgen und
bei durch einen Roboter betätigter Zange die Steuerung der Zange und des Roboters, das Vorrücken der Flaschen und das Vorrücken der Kisten durch einen Operator mit ein und derselben manuellen Steuerungsschnittstelle (29) gesteuert werden.

7. Vorrichtung nach Anspruch 6,
**dadurch gekennzeichnet,**
**dass** die dritte Geschwindigkeit größer ist als die zweite Geschwindigkeit.

8. Vorrichtung nach einem der Ansprüche 6 oder 7,
**dadurch gekennzeichnet,**
**dass** die Zange (11) eine Stange (23) umfasst, die angeordnet ist, um mit dem Arm des Roboters (14) verbunden zu werden, und die mit vier Kanälen (24) zum Einführen der Flaschenhälse (17) versehen ist, wobei jeder Kanal mit einem Kragen (28) zum Stützen des oberen Bereichs der Hälse von Flaschen versehen ist, deren Hals in die Kanäle eingeführt worden ist.

## Claims

1. Method for handling bottles (2) in which the bottles are transferred and presented vertically in a longitudinal line to a bottle takeover station (5) disposed opposite a station (6) for presentation of racks (7), the racks (7) being disposed horizontally and provided with at least one first horizontal row (8) of cells (9) for retaining said bottles, in which method the following steps are performed:
the necks (12) of a first series (16) of at least three bottles are gripped with a gripping clamp (11),
the first series of bottles thus gripped are presented horizontally, on the open end (18) of the first horizontal row of cells (9) of a first rack (7),
said first series of bottles are caused to completely enter said first row (8) horizontally,
the clamp (11) is released so as to grip a second series of bottles which are introduced subsequently or in a second row (8) of said first rack, repeating the steps applied above to said first series and so on in order to fill all the rows of said first rack, then
said first rack (7) is discharged and the steps above are repeated on a subsequent rack,
**characterised in that** the bottles (2) are displaced between the vertical line and a first position at a distance from the rack at a first speed, the bottles (2) are displaced between this position at a distance and a second position of tilted docking of the bottoms (17) of the bottles on said open end, the angle α for docking the bottoms of the bottles being between 45° and 20° to the horizontal, and said bottles (2) are tilted to the horizontal at a second speed lower than the first speed, and the bottles are introduced into said first row of cells (9) at a third speed.

2. Method according to claim 1, **characterised in that** the angle α is of the order of 30°.

3. Method according to any one of the preceding claims, **characterised in that** the third speed is higher than the second speed.

4. Method according to claim 3, **characterised in that** the second speed for docking the bottoms (17) of bottles on the open end (18) of a row of rack cells is lower than 200 mm/s.

5. Method according to any one of the preceding claims, **characterised in that** the steps are performed automatically or semi-automatically, and **in that**, as the clamp (11) is actuated by a robot (14), control of the clamp and robot (14), advance of the bottles (2) and advance of the racks (7) are controlled by an operator (22) with the same single manual control interface (29).

6. Apparatus (1) for handling bottles (2) comprising means (3) for the transfer and vertical presentation of bottles (2) in a longitudinal line to a station (5) for takeover of the bottles, said takeover station (5) and a station (6) for presentation of racks (7), each rack (7) being provided with at least one first row (8) of cells (9) for retaining bottles (2), in which the station (6) for presentation of the racks (7) comprises means (10) for supply and positioning of the racks horizontally opposite the takeover station (5),
the takeover station (5) comprises
a clamp (11) for gripping the necks (12) of a first series (16) of at least three bottles (2),
a robot (14) provided with an arm (13) fixed to and displaceable with the clamp (11), arranged to present horizontally the first series (16) of bottles thus gripped on the open end (18) of the first horizontal row (8) of cells (9) of a first rack (7), before horizontally driving them completely into said first row (8),
control means (15, 29) for then releasing the clamp (11) and gripping a second series of bottles (2) in order to introduce them into a second row (8) of said first rack (7), repeating the steps applied above to said first series and so on in order to fill all the rows (8) of said first rack, and
conveyor means (10) for discharging said first rack thus filled and substituting a subsequent rack (7) at the rack presentation station (6),
**characterised in that** the robot control means (15, 29) are arranged to displace the bottles (2) between the vertical line and a first position at a distance from the rack
at a first speed, to displace the bottles (2) between this position at a distance and a second position of tilted docking of the bottoms (17) of the bottles (2) on said open end, the angle for docking the bottoms of the bottles being between 45° and 20° to the horizontal, and tilting of the bottles horizontally at a second speed lower than the first speed, and to introduce the bottles (2) into the cells (9) at a third speed, **in that** the steps are performed automatically, and **in that**, as the clamp is actuated by a robot, control of the clamp and robot, advance of the bottles and advance of the racks are controlled by an operator with the same single manual control interface.

7. Apparatus according to claim 6, **characterised in that** the third speed is higher than the second speed.

8. Apparatus according to any one of claims 6 or 7, **characterised in that** the clamp (11) comprises a bar (23) arranged to be connected to the arm of the robot (14) and provided with four channels (24) for insertion of the bottle necks (17), each channel being provided with a collar (28) for supporting the upper parts of the neck ends of bottles of which the necks have been inserted in said channels.
